# EUROPEAN PATENT SPECIFICATION

(11) **EP 1 883 293 B1**
(45) Date of publication and mention of the grant of the patent: **30.06.2010**
(21) Application number: 06760127.8
(22) Date of filing: 19.05.2006
(51) Int. Cl.: A01K 11/00, A01K 13/00, A01K 27/00

(54) **COMPOSITION AND METHOD FOR CONTROLLING INSECTS**
ZUSAMMENSETZUNG UND VERFAHREN ZUR KONTROLLE VON INSEKTEN
COMPOSITION ET METHODE DE LUTTE CONTRE LES INSECTES

(30) Priority: 24.05.2005 US 684201 P
(43) Date of publication of application: 06.02.2008
(60) Divisional application: 09014682.0
(73) Proprietor: Wyeth LLC, Madison, NJ 07940 (US)
(72) Inventor: ALBRIGHT, Robert B., Chalfont, Pennsylvania 18914 (US); SABNIS, Shobhan, Pennington, New Jersey 08534 (US); ZUPAN, Jacob, A., Yardley, Pennsylvania 19067 (US)
(74) Representative: Talbott, Dawn Jacqueline
(86) International application number: PCT/US2006/019302
(87) International publication number: WO 2006/127407

(56) References cited:
- EP-A1- 1 334 661
- GB-A- 2 114 442
- US-A- 4 195 075
- US-A- 5 194 265
- US-A1- 2004 122 075
- INTERNET CITATION, [Online] Retrieved from the Internet: <URL:http://www.alanwood.net/pesticides/met aflumizone.html> [retrieved on 2008-10-28]
- HARVEY ET AL: 'Clinical evaluation of insecticide-impregnated tags attached to chains and used as backrubbers for control of haematobia irritans' VETERINARY PARASITOLOGY vol. 22, 1986, NL, pages 303 - 306
- WYETH LLC: 'Further example of the invention of AM-102069'
- SABNIS ET EL: 'Topical formulations of metaflumizone plus amitraz to treat flea and tick infestations on dogs' VETERINARY PARASITOLOGY vol. XXX, 2007, NL, pages 1 - 7

## Description

### BACKGROUND OF THE INVENTION

The present invention relates to a composition and method for controlling insects. Many recently developed techniques used for the control of insects involve slow-release pesticide technology. The use of pest strips, collars, bands, and tags which have an insecticide contained throughout the substrate of the final device are described in U.S. Patent 3,318,679; U.S. Patent 3,944,662; U.S. Patent 3,756,200; U.S. Patent 3,942,480 and U.S. Patent 4,195,075. The latter patent describes an insect control device containing an insecticidally active isomer of 1-cyano-3-phenoxy-benzyl-α-isopropyl-4-chlorophenylacetate. U.S. Patent 5,104,659 describes coated devices that enable the incorporation of insecticidal agents that were not suitable for incorporation into devices prepared by extrusion and injection molding.

The increased popularity of devices such as insecticidal animal ear tags, neck-worn collars and pendants over the past few years has resulted in considerable effort to develop improved devices to overcome the problems that become apparent as their use increases. Improvements in design, compositions, and manufacturing techniques are constantly being sought to overcome problems such as breakage and loss, and to improve efficacy and ease of application. Breakage and loss occur in ear tags such as those described in U.S. Pat. No. 3,731,414, due to their size, design and method of attachment which results in portions of the tag being subjected to flex and stress in the field for prolonged periods of time. Additionally, breakage or weakness of a plastic tag can result from the incorporation of an active ingredient or mixture of active ingredients that may actually weaken the polymer matrix. Further, the particular characteristics of the active ingredient require attention to ensure that the active ingredient maintains its insecticidal activity in the polymer matrix.

Interference or degradation of an active component with or during the polymerization or manufacturing process, resulting in weakness and breakage of the resultant ear tag, is an area of great concern in the preparation of animal ear tags. An increase in the concentrations of active component is a limiting factor to the strength of the resulting plastic tag.

It is an object of this invention to provide compositions and devices that are not restricted by the above limitations.

### SUMMARY OF THE INVENTION

The present invention according to claim 1 provides a composition that comprises an effective amount of metaflumizone in the form of an ear tag, neck collar or pendant for use with homothermic animals.

The ear tag may be in either a one-component form, or the form of a two-component ear tag, that will withstand the flex and stress pressures present in the field over prolonged periods of time, thereby resulting in reduced ear tag breakage and loss. The ear tags, neck collars or pendants, advantageously, are capable of holding a high concentration of metaflumizone, thereby increasing their efficacy and spectrum of activity; especially for insects which plague cattle, dogs, cats and other homothermic animals that graze or otherwise spend time in open areas. An additional advantage of a two-part animal ear tag of this invention is that the second component may be replaced without having to repuncture the ear of the animal each time the insecticide needs replacing. In one embodiment, the present invention is an animal ear tag, neck collar or pendant comprising about: 40% to 90% of a thermoplastic resin; and 1% to 30% of metaflumizone. Optionally, 0.0% to 4.0% of a processing stabilizer; 0.2% to 10.0% of a lubricant; 0.3% to 0.5% of a chelating agent; 1% to 2.5% of a heat processing stabilizer; 0% to 5.0% of a flow agent; 0% to 35.0% of insecticidal synergists and migration accelerators; 5.0% to 25.0 % of a plasticizer or mixture of plasticizers; 0.5 to 2.0% colorant; and 0 to 30% of one or more additional insecticidal agents may also be added. In a further embodiment, the composition is impregnated or coated onto a mesh matrix component of a natural or synthetic cloth or fiber or wire or a solid dispersion of polyvinylchloride polymer or copolymer to form an ear tag, neck collar or hanging pendant device.

### DETAILED DESCRIPTION OF THE INVENTION

In a two-part ear tag device or a pendant, the first component constructed so as to be attached to the animal may be constructed of virtually any material of suitable size and strength. Preferably the first component is manufactured from thermoplastic resin materials, such as polyvinylchloride resins and polyurethrane elastomers or impregnated cloth, fabric, or other material.

A suitable pin, clip or ring for the two part ear tag or pendant embodiment of the invention may be of any design including that of a bayonet type system, provided it holds the ear tag or pendant in place. A means for securing the pin may optionally be employed and it may be either an integral part of the design or an independent unit. U.S. Pat. No. 3,731,414 discloses a preferred means of attachment to the animal's ear which is suitable for the present invention.

The component carrying the metaflumizone is normally comprised on a weight basis of about 40% to 90% of a polyvinylchloride or other thermoplastic resin; and about 1% to 30% of metaflumizone. Depending upon the characteristics of the polyvinylchloride or other thermoplastic resin chosen, other optional components may include about 0.0% to 4.0% of a processing stabilizer such as epoxidized soybean oil; about 0.02% to 10.0% of a lubricant such as stearic acid; about 0.3% to 0.5% of a chelating agent such as trinonylphosphite; about 01 % to 2.5% of a heat processing stabilizer such as calcium-zinc stearate; about 0% to 5.0% of a flow agent such as SiO₂; about 0% to 35.0% of insecticidal synergists and migration accelerators such as piperonyl butoxide; about 0% to 25.0% of a plasticizer or mixture of plasticizers such as dioctylphthalate, benzylbutylphthalate, dibutylphthalate, citrate esters, adipates or sebacates; and about 1% to 30% of additional insecticidal agents, such as amitraz, fipronil, imidachloprid, permethrin, pyrethrins, piperonyl butoxide, chlorfenapyr or fenothrin. If desired, a colorant, in the amount of about 0.5 to 2.0% can be added, especially to provide distinction of animals with the metaflumizone-bearing device.

Metaflumizone is a new insecticide, see e.g. EP-A-1 334 661. U. S. Patent 5,543,573, and U. S. Published Application 2004-0122075A1 describe ecto-parasiticidal agents.

The metaflumizone-bearing component may be fabricated out of a material which is preferably different from the material of the first component. This metaflumizone-bearing component may be fabricated on a matrix such as a natural or synthetic cloth or fiber mesh for example, polyaramid or a polyester, wire mesh or a solid dispersion of polyvinylchloride polymer or copolymer matrix by coating, extruding, coextruding or impregnating the metaflumizone-resin composition onto the matrix.

The metaflumizone-bearing component may be fabricated by preparing a blend of the dry ingredients by admixing them in a blender, heating the mixture while blending it in a temperature range of 80 °C to 120 °C. and slowly adding a mixture of the liquid ingredients and mixing until a relatively dry blend is obtained. The resulting homogeneous blend is cooled while mixing and the optional SiO₂ added and blended in to obtain a homogeneous dry blend, which may then be molded, extruded or coextruded optionally onto a matrix or the dry blend may then be pelletized by extrusion and the pelletized dry blend then molded, extruded, or coextruded optionally onto a matrix as described above and punched or cut into the desired shape. Alternatively, the metaflumizone-bearing component may be prepared by coating or dipping a matrix with a vinyl dispersion containing the active ingredients, as disclosed herein by U.S. Patent 5,104,659. Additionally, this metaflumizone-bearing component may contain more than one section. Individual sections may be composed of the same or different ingredients and may also provide different release rates of active ingredients. Such a second component allows for the application of active ingredients which would not be compatible in a single section as well as an alternative method for delivering mixtures of active ingredients at the same or different rates.

For some applications, it has been found that the use of impregnated coated, extruded or co- extruded fabric matrix tags of a one piece design offers several advantages over conventional one piece molded tags. When a composition containing an insecticidally active ingredient or mixture of insecticidally active ingredients is fabricated on a matrix of natural or synthetic cloth or fiber mesh, or a wire mesh, the result is a stronger ear tag which is less prone to breakage and thus allows a greater range of compositions to be incorporated into the tag. Also, the one piece matrix animal ear tag, due to the strength of the matrix, is not as restricted in the means of attachment to the ear as a plastic molded ear tag. Such matrix materials are also suitably formed as neck collars or pendants.

The invention is further illustrated by the following non-limiting examples. The first or second components shown herein are intended to encompass all design modifications including different shapes and sizes.

### EXAMPLE 1

### PREPARATION OF A SINGLE COMPONENT EAR TAG OR NECK COLLAR

### A. Dry Blend

Dry blends of various compositions are prepared utilizing the ingredients listed in Table I below by blending the solid ingredients until a homogeneous mixture is obtained and then heating the mixture to 85 °C. A mixture of the liquid ingredients is then slowly added to the agitated mixture. When all of the liquid is added to the mixture, the mixture is heated to 110 °C and agitated for 10 minutes. The agitated blend is cooled to 70 °C and sufficient SiO₂ is added to obtain a free-flowing dry blend. The dry blend is then cooled to ambient temperatures and collected.

**TABLE I**

| | | Wt(g) | % Wt of Dispersion |
|---|---|---|---|
| Polyvinylchloride resin | | 100 | 44.4-62.9 |
| Epoxidized Soybean Oil | | 10.88 | 4.8-6.8 |
| Stearic Acid | | 0.54 | 0.2-0.3 |
| Trinonylphosphate | | 0.65 | 0.3-0.4 |
| Ca/Zn Stearate | | 1.96 | 0.9-1.2 |
| SiO₂ | | 0.71 | 0.3-0.4 |
| Hyp 212P | | 0.44 | 0.2-0.3 |
| Hyp 211 P | | 0.76 | 0.3-0.4 |
| HW 132P | | 1.09 | 0.5-0.7 |
| UV Stabilizer 5411 | | 0.65 | 0.3-0.4 |
| Metaflumizone | | 17.74 to 40.00 | 7.9-25.2 |
| Plasticizers mixture | | 18.9 to 46.0 | 8.4-29.5 |
| | benzylbutylphthalate | | |
| | dibutylphthalate | | |
| | dioctylphthalate | | |
| | acetyltributyl citrate | | |
| | dioctyladipate | | |

### B. Pelletizing

The compositions prepared in A above may be pelletized using standard low shear extruders at elevated temperatures normally in the range of 149 °C to 177 °C (300° F to 350 °F). The resulting extruded material is then cut to the desired size by air chopping and the resulting pellets are packaged.

### C. Injection Molding

Pellets prepared as in B above are charged to a 350 ton press and the temperature and time profile is set to 163 °C (325 °F) for twenty seconds. The compositions are molded to the desired size by injection molding or extruded and the resulting components packaged.

Another method of preparation of single phase ear tags would be to dry blend the following ingredients at room temperature:

| Ingredient | Amount (parts) |
|---|---|
| Modified PVC such as Superkleen® polyvinyl chloride resin (sold by AlphaGary) | 69-89 |
| | |
| Metaflumizone | 10 to 30 |
| | |
| Colorant (as needed) | 0-1 |

These ingredients, after dry blending in an appropriate mixer such as a ribbon blender, are then transferred to a single or twin screw extruder which in turn feeds an injection molding device to mold to the desired form or configuration.

### EXAMPLE 2

### PREPARATION OF CLOTH MATRIX METAFLUMIZONE COMPONENTS

Metaflumizone-bearing components are prepared using the dry blends prepared as described in Example 1A, containing 54 parts by weight of the metaflumizone, and 18 parts by weight of several plasticizers per 100 parts of PVC. These dry blends are pelletized and extruded onto a cloth matrix and punch and die cut to the desired shape giving an insecticidal component weighing approximately 8 grams.

### EXAMPLE 3

### PREPARATION OF METAFLUMIZONE COATING COMPOSITION

Acetyl tributyl citrate 180 g is added to a stirred mixture of 300 g of a vinyl resin having an inherent viscosity of 1.20 and average particle size of 0.95 microns and optionally 6 g of Ca/Zn stearate and 9 g of epoxidized soybean oil. To this stirred mixture is added 100 g of metaflumizone (90% pure). The resulting mixture is stirred until homogeneous and then deaerated at room temperature overnight at 686 mm/Hg.

### EXAMPLE 4

### PREPARATION OF METAFLUMIZONE-CONTAINING COMPONENT OF A TWO-PIECE TAG CONTAINING METAFLUMIZONE

A solid matrix is preheated to 100° C. and dipped into the insecticidal coating composition prepared in Example 2. The resulting coated components are cured in an oven at 90 °C to 135 °C for five to eight minutes, resulting in coated matrixes containing 1.7 g to 2.86 g of the metaflumizone coating composition.

### EXAMPLE 5

### PREPARATION OF COATED MATRIX CONTAINING METAFLUMIZONE

(a) A vinyl dispersion is prepared utilizing the procedure of Example 3 and the materials listed in Table II below.

**TABLE II**

| Ingredient | Wt (g) | % Wt of Dispersion |
|---|---|---|
| Resin (Inherent viscosity 1.20 average) | 300 | 49.72 |
| (particle Size 0.95 microns) | | |
| Butyl benzyl phthalate | 180 | 29.82 |
| Epoxidized soybean oil | 9 | 1.49 |
| Ca/Zn Stearate | 6 | 0.99 |
| Benzophenone ultraviolet stabilizer | 2 | 0.33 |

(b) Metaflumizone coating compositions may then be prepared by addition of the metaflumizone to the vinyl dispersion prepared in Example 5(a) and blending until homogeneous. The resulting mixture is then deaerated at reduced pressure 686 mm/Hg for 16 hours, giving a metaflumizone composition suitable for preparing coated ear tag devices.
(c) Ear tag insect control devices may then be prepared by coating and curing the resulting coated matrix at 90 °C. to 135 °C for 2-10 minutes.

### EXAMPLE 6

### CO-EXTRUDED BILAYER CATTLE EAR TAGS CONTAINING METAFLUMIZONE AND VARIOUS OTHER INSECTICIDES

Another method of preparation of bilayer ear tags would be prepare two dry blended compositions, one containing metaflumizone, and separately, a dry blend containing another insecticide, such as, but not limited to, amitraz, fipronil, imidachloprid, permethrin, pyrethrins, piperonyl butoxide, chlorfenapyr, fenothrin.

Each of the layers would be prepared in an analogous manner:

### LAYER 1

| | |
|---|---|
| Modified PVC Superkleen^{®} polyvinyl chloride resin (sold by Alpha Gary) | 100 parts |
| | |
| Metaflumizone | 10 to 40 parts |
| | |
| Colorant (as needed) | 0-1 part |

### LAYER 2

| | |
|---|---|
| Modified PVC Superkleen® polyvinyl chloride resin (sold by Alpha Gary) | 100 parts |
| | |
| Acetyl tributyl citrate or another acceptable plasticizer | 30 parts |
| | |
| Amitraz | 10 to 30 parts |
| | |
| Colorant (as needed) | 1 part |

Each of the layers is blended separately in a device such as a ribbon blender. Each composition is loaded into a dual-feed extruder where a single or twin screw extruder in turn feeds an injection molding device. The screw extruder works each phase separately. The resulting molten matrices can then be injected into the mold which is configured as an ear tag with appropriate dimensions for thickness and total ear tag weight, formed under vacuum and then expelled for cooling and curing at room temperature.

### EXAMPLE 7

### PREPARATION OF A ONE PIECE MATRIX ANIMAL EAR TAG BY EXTRUSION ONTO POLYESTER CLOTH

Two dry blends are prepared by the procedure of Example 1 containing, on a weight basis, 100 parts PVC, 18.88 parts epoxidized soybean oil, 0.54 parts stearic acid, 0.65 parts trinonylphosphate, 1.96 parts Ca/Zn stearate, 0.44 parts HYP212, 0.76 parts HYP211, 2.0 parts HW132, 0.65 parts UIV stabilizer, 30 parts metaflumizone ; one with 18 parts Benzylbutylphthalate (BBP), and the other with 18 parts acetyltributyl citrate (ATBC). Each of these dry blends are coated onto a fabric mesh matrix by coextruding the melt through a profile die onto the matrix. The resulting impregnated matrix is cut into the shape of a standard one piece animal ear tag weighing approximately 8.5 grams.

These insecticidal ear tags are hung in a chamber covered with mesh cloth to keep the flies confined in the 305 x 4.3 x 229 mm (12 x.17" x 9") space. Each chamber contains a cup of water and a supply of sugar and powdered milk.

At the start of the test, about. 100 three to five day old house flies are placed in each chamber. The chambers are kept in a room with the temperature at 28 °C (82 ° F). The flies are observed daily (except Saturday and Sunday) and mortality is recorded. At the termination of the study, the chambers are placed in a freezer overnight to kill the remaining flies, which are counted. The percent mortality is calculated based on the number of flies that die during the observation and the number of flies counted at the end of the study.

## Claims

1. A composition comprising on a weight basis about: 40% to 90% of a thermoplastic resin which is a PVC resin; and 1% to 30% of metaflumizone in the form of an animal ear tag, neck collar or pendant for use with homothermic animals.

2. A composition according to claim 1, wherein the ear tag is fabricated on a matrix of a natural or synthetic cloth or fiber mesh, wire mesh or a solid dispersion of polyvinylchloride polymer or copolymer.

3. A composition according to claim 1 or 2 additionally comprising on a weight basis about: 0.0% to 4.0% of a processing stabilizer; 0.2% to 10.0% of a lubricant; 0.3% to 0.5% of a chelating agent;
1 % to 2.5% of a heat processing stabilizer:
0% to 5.0% of a flow agent;
0% to 35.0% of insecticidal synergists and migration accelerators;
5.0% to 25.0 % of a plasticizer or mixture of plasticizers;
0.5 to 2.0% colorant; and
0 to 30% of one or more additional insecticidal agents.

4. A composition according to claim 3 which additionally includes amitraz.

5. A method for controlling insects in a localized environment, said method comprising: contacting an animal with an ear tag, neck collar or pendant comprising the composition of claim 1, 2, 3 or 4.

## Patentansprüche

1. Zusammensetzung umfassend auf Gewichtsbasis zu ungefähr: 40% bis 90% ein thermoplastisches Harz, welches ein PVC-Harz ist; und 1 % bis 30% Metaflumizon in Form einer Tierohrmarke, eines Halsbands oder eines Anhängers zur Verwendung mit homoiothermen Tieren.

2. Zusammensetzung nach Anspruch 1, wobei die Ohrmarke auf einem Grundmaterial eines natürlichen oder synthetischen Stoffs oder Fasergeflechts, eines Drahtgeflechts oder einer festen Dispersion eines Polyvinylchlorid-Polymers oder -Copolymers gefertigt ist.

3. Zusammensetzung nach Anspruch 1 oder 2, zusätzlich umfassend auf Gewichtsbasis zu ungefähr: 0,0% bis 4,0% einen Verarbeitungsstabilisator;
0,2% bis 10,0% ein Schmiermittel; 0,3% bis 0,5% einen Chelatbildner;
1 % bis 2,5% einen Wärmeverarbeitungsstabilisator;
0% bis 5,0% ein Fließmittel;
0% bis 35,0% Insektizid-Synergisten und Migrationsbeschleuniger;
5,0% bis 25,0% einen Weichmacher oder eine Mischung von Weichmachern;
0,5 bis 2,0% einen Farbstoff; und
0 bis 30% ein oder mehrere zusätzliche insektizide Mittel.

4. Zusammensetzung nach Anspruch 3, welche zusätzlich Amitraz umfasst.

5. Verfahren zur Bekämpfung von Insekten in einer örtlich begrenzten Umgebung, wobei das Verfahren Folgendes umfasst: Inkontaktbringen eines Tiers mit einer Ohrmarke, einem Halsband oder einem Anhänger umfassend die Zusammensetzung nach Anspruch 1, 2, 3 oder 4.

## Revendications

1. Composition comprenant sur une base pondérale environ : 40 % à 90 % d'une résine thermoplastique qui est une résine PVC ; et 1 % à 30 % de métaflumizone sous la forme d'une étiquette auriculaire pour animal, d'un collier ou d'un pendentif pour une utilisation chez des animaux homéothermes.

2. Composition selon la revendication 1, dans laquelle l'étiquette auriculaire est fabriquée sur une matrice d'un tissu ou d'une maille de fibre naturelle ou synthétique, un treillis métallique ou une dispersion solide de polymère ou copolymère de poly(chlorure de vinyle).

3. Composition selon la revendication 1 ou 2 comprenant de plus sur une base pondérale environ : 0,0 % à 4,0 % d'un stabilisant de traitement ; 0,2 % à 10,0 % d'un lubrifiant ; 0,3 % à 0,5 % d'un agent chélatant ;
1 % à 2,5 % d'un stabilisant de traitement à chaud ;
0 % à 5,0 % d'un agent d'écoulement ;
0 % à 35,0 % de synergistes d'insecticides et d'accélérants de migration ;
5,0 % à 25,0 % d'un plastifiant ou d'un mélange de plastifiants ;
0,5 à 2,0 % de colorant ; et
0 à 30 % d'un ou plusieurs agents insecticides supplémentaires.

4. Composition selon la revendication 3 qui inclut de plus de l'amitraz.

5. Procédé destiné à lutter contre les insectes dans un environnement localisé, ledit procédé comprenant : la mise en contact d'un animal avec une étiquette auriculaire, un collier ou un pendentif comprenant la composition de la revendication 1, 2, 3 ou 4.
